# EUROPEAN PATENT APPLICATION

(11) **EP 4 733 328 A1**
(43) Date of publication of application: **29.04.2026**
(21) Application number: 24209270.8
(22) Date of filing: 28.10.2024
(51) Int. Cl.: C08F 2/01, C08F 2/34, C08F 6/00, C08F 210/06

(54) **PROCESS AND SYSTEM FOR SETTING UP IMPACT COPOLYMER POLYPROPYLENE PRODUCTION AND PROCESS AND SYSTEM FOR PRODUCING THE SAME**

(71) Applicant: Lummus Novolen Technology GmbH, 68165 Mannheim (DE)
(72) Inventor: Bangerth, Stefan, 68165 Mannheim (DE); Froelich, Sarah, 68165 Mannheim (DE); Ruhl, Oliver Marco, 68165 Mannheim (DE)
(74) Representative: Osha BWB

(57) **Abstract**

Embodiments disclosed herein relate to a use of propane contained in a propylene feedstock for setting up impact copolymer polypropylene production in at least two polymerization zones comprising accumulating the propane in a first polymerization zone (2, 5) during a parallel operation mode of the first polymerization zone (2, 5) and a second polymerization zone (7, 10) producing respective propylene polymers. Embodiments disclosed herein also relate to a process and a system for setting up impact copolymer polypropylenes production.

## Description

### TECHNICAL FIELD

The present disclosure relates to a process and a system for setting up a production of impact copolymer polypropylene in at least two polymerization zones. A process and a system for producing such copolymers are also described in the present disclosure. Further, the present disclosure relates to a use of propane contained in a propylene feedstock for setting up an impact copolymer polypropylene production in at least two polymerization zones.

### BACKGROUND ART

There is continuous need to improve resource efficiency in polypropylene production, in particular impact copolymer polypropylene production. Resource efficiency, according to the present disclosure, may comprise one or more of low consumption of water, heat, power and chemical feedstock, small equipment size and low equipment count, and high process on-stream time.

Dissipating the heat produced by propylene polymerization processes can be challenging with respect to power consumption. A "reactor recycle gas", *i.e.,* a stream of overhead gases containing unreacted monomer, may be for example withdrawn from a gas-phase reactor, in which polymerization takes place, cooled and then recycled to the reactor, thereby cooling the reactor.

The production of impact copolymer of propylene and ethylene, which may be for example performed in a first gas-phase reactor mainly fed with propylene and a second gas-phase reactor fed with ethylene and optionally, with propylene, the two polymerization zones being arranged in series, may be more energy-intense than the production of homopolymers of polypropylene. Indeed, the ethylene content in the reactor recycle gas (generally the recycle of the second reactor downstream the first one) lowers the dew point of the reactor recycle gas, thereby hindering efficient heat rejection.

By way of example, during production of such impact copolymers in two gas-phase cascade reactors, the ethylene to propylene molar ratio in the gas phase of the second reactor may be about 2:3. This high ethylene content hinders condensation and thereby increases power consumption of the heat dissipation. When a second reactor recycle gas is for example compressed by a compressor and cooled by routing it over a heat exchanger with cooling water as coolant to cool this reactor, the complete recycle gas may be compressed with a pressure ratio of above 2 to allow condensation against cooling water. Correspondingly, a power demand for the gas compression alone may be equal or more than 50 kWh per ton of polypropylene product, depending on the system configuration.

While an alternative approach based on condensing the second reactor recycle gas against a refrigerant or chilled water may provide a higher degree of condensation at lower pressure of the reactor recycle gas, the operation of a refrigeration system may require additional power consumption.

Between the approach based on a higher compression ratio and a heat rejection against cooling water and the approach based on a lower compression ratio and a heat rejection against a refrigerant, a variety of combinations and operating conditions may be used. For example, increasing the discharge pressure from the compressor may lead to a higher degree of condensation, while combining cooling against cooling water with condensation against a refrigerant may reduce the duty of the refrigeration system.

A further alternative approach based on cooling mainly by sensible heat removal with only minor condensation rates may require only a small pressure increase but may lead to much larger flow rates and hence high power consumption as well.

In the attempt to mitigate these issues, the prior art teaches producing olefin polymers, including impact copolymer polypropylene, by using an inert condensing agent that allows to condense a certain amount of recycle gas against cooling water without increasing the pressure. However, the prior art proposals require a dedicated storage and feed system for storing and introducing the inert condensing agent in the polymerization system.

For example, EP 3 519 447 B1 describes a polymerization process for producing polyethylene polymers, the process comprising contacting one or more monomers, at least one catalyst system, and a condensing agent comprising propane under polymerizable conditions to produce a polyethylene polymer.

Alternative condensing agents which may be added to a polypropylene process in a fluid bed reactor are described in US 6 391 985 B1. These agents include propane, butane, pentane, isopentane and hexane and are stated to be used only with homopolymers or random copolymers, and to be especially useful during the production of propylene-butene random copolymers.

US 9 624 323 B1 relates to a first polymerization including the polymerization of propylene and optional comonomer and a second polymerization including the polymerization of propylene and comonomer(s) the sum of which contains less propylene. In particular, US 9 624 323 B1 describes a process including adding an initial dose of propane (or other similar inert) into a polymerization reaction system during a transition step before polymer production, which may be done via externally sourced propane or propane collected from the polymerization process during production of a first polymer product. In both cases, the purpose of adding the propane, according to US 9 624 323 B1, is to modify the dewpoint of the mixture in the reaction system to allow condensation which, in turn, enhances removal of the heat of reaction. In the case where propane is collected from within the polymerization reactor system, the first polymerization is performed in a gas-phase polymerization reactor. When the desired quantity of the first polymer product has been made, the conditions are changed to those necessary for producing the second product. Accordingly, the second polymerization, which produces a propylene/C4-C10 interpolymer, and in particular a propylene/ethylene/butene terpolymer, is also performed in the same gas-phase polymerization reactor. Embodiments of US 9 624 323 B1 require, downstream of the reactor, a vent recovery separator, a filter, a drier and a storage tank for propane collection, storage and injection into the reactor.

Some prior art proposals concerning the production of impact propylene-ethylene copolymers may require gas processing or separation of a carrier gas before recycling different types of monomers to the reactor(s), which in turn requires dedicated processing or separation equipment. Indeed, impact copolymer grades may range from products having high propylene-ethylene copolymer content (*e.g.,* > 30 wt%), to products having low propylene-ethylene copolymer content (*e.g.,* <= 10 wt%). During production of grades having low copolymer content, recycle gas is purged, for example by a dedicated purge stream, from a copolymerization reactor recycle gas loop to achieve the required ethylene to propylene gas ratio. The purged gas stream requires gas separation before selectively recycling different types of monomer to the first reactor or second reactor. In turn, gas separation requires specific equipment.

In view of the above, on the one side, the need of quickly transitioning from propylene homopolymer production or from random copolymer production to impact copolymer production in at least two polymerization zones without a dedicated inert condensing agent feed system is still unmet. On the other side, within the context of processes and systems for the production of impact copolymer polypropylene in at least two polymerization zones, which is particularly energy-intense, the need of improving resource efficiency is also still unmet.

### SUMMARY OF THE DISCLOSURE

Embodiments disclosed herein provide a process and a system for setting up impact copolymer polypropylene production in at least two polymerization zones as well as a corresponding production process and a corresponding production system for producing impact copolymer polypropylene that comprise the above-mentioned setting up process and system, respectively. Embodiments disclosed herein further provide a use of propane contained in a propylene feedstock for setting up impact copolymer polypropylene production in at least two polymerization zones.

The processes, systems and use may advantageously perform the removal of heat of polymerization while improving resource efficiency without requiring a dedicated inert condensing agent feed system or additional process steps such as gas separation steps. Indeed, the inventors have recognized that improved processes and systems may simply use available propylene feedstocks containing propane as inert condensing agent to facilitate condensation of recycle gas.

Among others, embodiments disclosed herein may result in a significant reduction of energy consumption of recycle fluid cool loops. Moreover, a dedicated refrigeration system is not required. When used, the refrigeration system may be largely downsized when compared to conventional processes and systems.

In one aspect, embodiments disclosed herein relate to a process for setting up impact copolymer polypropylene production in at least two polymerization zones, the process comprising: feeding a first propylene stream comprising propane to a first polymerization zone, thereby producing a first product comprising a first propylene polymer and a first carrier fluid; recycling a first reactor recycle stream to the first polymerization zone; feeding a second propylene stream comprising propane to a second polymerization zone operated in an operation mode parallel to the first polymerization zone, thereby producing a second product comprising a second propylene polymer and a second carrier fluid; recycling a second reactor recycle stream to the second polymerization zone; recycling a carrier fluid recycle stream comprising the first carrier fluid and the second carrier fluid to the first polymerization zone and to the second polymerization zone; once a total propane content in the first reactor recycle stream and the second reactor recycle stream attains a first threshold, switching the operation mode from the parallel operation mode to a serial operation mode; transferring propane accumulated in the first polymerization zone to the second polymerization zone; and once the propane content in the second reactor recycle stream reaches a second threshold higher than the first threshold, stopping recycling the carrier fluid recycle stream to the first polymerization zone.

In a further aspect, embodiments disclosed herein relate to a production process for producing impact copolymer polypropylene, wherein the production process comprises: the process as defined above; and in the serial operation mode: feeding a first olefin stream comprising at least 90%-100% v/v propylene and 0%-10% v/v ethylene in the first polymerization zone, thereby producing a third product comprising a propylene polymer (e.g., a homopolymer or a random copolymer of polypropylene); and feeding the third product and a second olefin stream comprising 30%-100% v/v ethylene and 0%-70% v/v propylene to the second reactor polymerization zone, thereby producing a fourth product comprising an impact copolymer polypropylene.

In a still further aspect, embodiments disclosed herein relate to a system for setting up impact copolymer polypropylene production in at least two polymerization zones, the system comprising: a first polymerization zone configured to convert a first propylene stream comprising propane to a first product comprising a first propylene polymer and a first carrier fluid; a second polymerization zone configured to be operated in an operation mode parallel to or serial with the first polymerization zone and convert a second propylene stream comprising propane to a second product comprising a second propylene polymer and a second carrier fluid; a recycle line for recycling, in the parallel operation mode, a carrier fluid recycle stream comprising the first carrier fluid and the second carrier fluid to the first polymerization zone and to the second polymerization zone; a controller configured to, once a total propane content in a first reactor recycle stream and a second reactor recycle stream attains a first threshold, switch the operation mode from the parallel operation mode to the serial operation mode; and at least one transfer line for transferring propane accumulated in the first polymerization zone to the second polymerization zone, wherein the controller is further configured to, once the propane content in the second reactor recycle stream reaches a second threshold higher than the first threshold, stop recycling the carrier fluid recycle stream to the first polymerization zone.

In a still further aspect, embodiments disclosed herein relate to a production system for producing impact copolymer polypropylene, comprising the setting up system as defined above, and a transfer system downstream of the first polymerization zone for transferring the propylene polymer produced in the first polymerization zone to the second polymerization zone when the second polymerization zone is operated in the operation mode serial with the first polymerization zone.

In a still further aspect, embodiments disclosed herein relate to a use of propane contained in a propylene feedstock for setting up impact copolymer polypropylene production in at least two polymerization zones, comprising accumulating the propane in a first polymerization zone and a second polymerization zone during a parallel operation mode thereof producing respective propylene polymers, and transferring the propane accumulated in the first polymerization zone to the second polymerization zone during a serial operation mode.

In the processes, systems and use according to the aspects described above, a quick transition from propylene homopolymer production or random copolymer polypropylene production to impact copolymer polypropylene production is attained, while ensuring an improved resource efficiency that includes, among others, a low equipment count. The quick transition may be achieved by a build-up of propane faster than the naturally, slow occurring build-up of propane, while resource efficiency may be achieved by using propane contained in a propylene feedstock. The different aspects described above result in sufficient propane (*i.e.,* sufficient condensing agent) accumulated in the reactor system, thus permitting condensing mode operation with high production rates in a normal run following a fast transition.

Heat rejection may occur without a dedicated inert condensing agent feed system and with a high degree of condensation of the reactor recycle gas, without requiring rejecting heat to a refrigerant or chilled water and compression of the reactor recycle gas upstream of a heat transfer equipment. According to one or more embodiments, only recycle gases left uncondensed downstream of the heat transfer equipment may be compressed before being recycled to the reactor. Thereby, the power consumption of a compressor used to recycle the second reactor recycle gas decreases significantly. The omission of cooling by external refrigeration may further reduce power consumption. Whenever cooling by external refrigeration is nevertheless added, the corresponding equipment may be of limited size.

Other aspects and advantages will be apparent from the following description and the appended claims, which define further embodiments of the processes, systems and use.

### BRIEF DESCRIPTION OF DRAWINGS

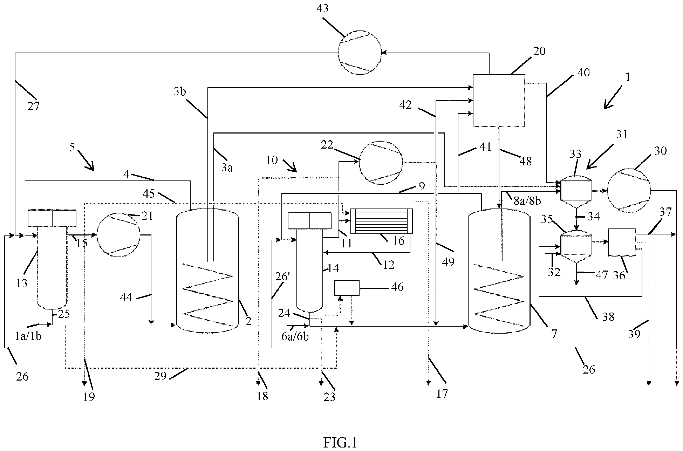

Figure 1 illustrates a simplified diagram of a system for the production of impact copolymer polypropylene according to one or more embodiments.

### DETAILED DESCRIPTION OF EMBODIMENTS

In one aspect, embodiments disclosed herein relate to a process for setting up impact copolymer polypropylene production in at least two polymerization zones. The setting up process may comprise feeding a first propylene stream comprising propane to a first polymerization zone, thereby producing a first product comprising a first propylene polymer and a first carrier fluid, and feeding a second propylene stream comprising propane to a second polymerization zone operated in an operation mode parallel to the first polymerization zone, thereby producing a second product comprising a second propylene polymer and a second carrier fluid. The setting up process may further comprise recycling a first reactor recycle stream to the first polymerization zone and recycling a second reactor recycle stream to the second polymerization zone. The setting up process may further comprise recycling a carrier fluid recycle stream comprising the first carrier fluid and the second carrier fluid to the first polymerization zone and to the second polymerization zone. Recycling, which may comprise compressing the second carrier fluid, results in accumulating propane in the first polymerization zone and the second polymerization zone. Once a total propane content in the first reactor recycle stream and the second reactor recycle stream attains a first threshold, the setting up process may further comprise switching the operation mode from the parallel operation mode to a serial operation mode, and transferring propane accumulated in the first polymerization zone to the second polymerization zone. The total propane content in the first reactor recycle stream and the second reactor recycle stream, which correlates with the total content of propane in the first polymerization zone and the second polymerization zone, may be readily measurable, for example by means of gas chromatography or other sensors. Transferring propane accumulated in the first polymerization zone to the second polymerization zone increases the propane content in the second polymerization zone. Once the propane content in the second reactor recycle stream reaches a second threshold higher than the first threshold, the setting up process may further comprise stopping recycling the carrier fluid recycle stream to the first polymerization zone. The propane content in the second reactor recycle stream after propane accumulated in the first polymerization zone is transferred to the second polymerization zone correlates with the content of propane in the second polymerization zone, and may be also readily measurable, for example by means of gas chromatography or other sensors.

In the present description and the following claims, an "impact copolymer polypropylene" is a heterophasic copolymer polypropylene comprising a matrix phase and an elastomeric phase dispersed therein, that may be made by copolymerizing propylene with a small amount of another monomer, such as, for example, ethylene. A small amount of monomer may be, for example, from 4 wt% to 30 wt%, *e.g.,* from 4 to 25 wt%, monomer, with respect to the total weight of the polymer product.

In the present description and the following claims, setting up impact copolymer polypropylene production in at least two polymerization zones is used to indicate a transition from a production of any non-impact polypropylene in the at least two polymerization zones to a production of an impact copolymer polypropylene in the at least two polymerization zones. For example, a non-impact polypropylene may comprise or consist of a propylene homopolymer or a random copolymer polypropylene.

In the present description and the following claims, a "random copolymer polypropylene" may be produced by incorporating ethylene and/or other comonomers randomly along the polypropylene chain, and is a copolymer of propylene monomer units and comonomer units, in which the comonomer units are randomly distributed in the polymeric chain.

According to one or more embodiments, at least the first propylene stream or each of the first propylene stream and the second propylene stream comprises at least about 0.2 wt% propane based on the total weight of the respective stream, such as, for example, from 0.2 wt% to 10 wt% propane, from 0.3 wt% to 5 wt% propane, or from 0.4 wt% to 2.5 wt% propane based on the total weight of the respective stream.

According to one or more embodiments, the same propylene feedstock may be used. In this case, the first propylene stream and the second polymer stream comprise the same propane content, which may be selected in any one of the above-mentioned exemplary ranges.

According to one or more embodiments, the first propylene stream and the second propylene stream may comprise a different propane content, which may be selected in two overlapping or distinct ranges of the above-mentioned exemplary ranges.

According to one or more embodiments, when the second polymerization zone is operated in an operation mode parallel to the first polymerization zone, the setting up process may comprise feeding a first catalyst to the first polymerization zone and feeding a second catalyst to the second polymerization zone.

According to one or more embodiments, any catalyst suitable for the polymerization of propylene may be fed to each of the polymerization zones, such as, for example, any catalyst selected from the group comprising Ziegler-Natta catalysts and single site catalysts, such as metallocene catalysts.

According to one or more embodiments, the first and the second catalyst may comprise a Ziegler-Natta catalyst. Ziegler-Natta catalysts comprise magnesium/titanium/electron donor complexes, optionally supported on a suitable support, for example including silica or MgCl₂, used in conjunction with an organo-aluminum cocatalyst and an external selectivity control agent, such as for example an aromatic carboxylic acid ester or an alkoxy silane compound. Suitable Ziegler-Natta catalyst may include titanium-based catalysts, such as the catalysts described in US 4 376 062 A, US 4 379 758 A, US 5 066 737 A and US 9 522 968 B2.

According to one or more embodiments, the first catalyst and second catalyst may comprise a metallocene catalyst. A metallocene catalyst comprises organometallic coordination complexes of one or more ligands in association with a metal atom. Examples of suitable metallocene catalysts are described, for example, in US 7 169 864 B2.

According to one or more embodiments, the first catalyst and the second catalyst may be identical. Alternatively, the first catalyst and the second catalyst may be different. For example, the first catalyst and the second catalyst may comprise different amounts or different types of external selectivity control agent, thereby targeting different product properties.

According to one or more embodiments, the setting up process may further comprise reducing a flow of the second catalyst fed to the second polymerization zone before switching the operation mode from the parallel operation mode to the serial operation mode. According to one or more embodiments, reducing the flow of the second catalyst may comprise stopping the flow of the second catalyst.

According to one or more embodiments, the setting up process may further comprise feeding one or more additional optional compounds, such as, for example, static control agent(s) and/or activity limiting agent(s) to one of or all the polymerization zones. According to one or more embodiments, one or more additional optional compounds may be fed directly or indirectly to one of or all the polymerization zones. According to one or more embodiments, one more additional optional compounds may be fed indirectly to at least the second polymerization zone by feeding any additional optional compound to one or more apparatus other than reactors comprised in the polymerization zones, such as, for example, to a transfer system which may be used for transferring the polymer obtained in the first polymerization zone to the second polymerization zone during the serial operation mode. The additional optional compounds may comprise, for example, a chain transfer agent (*e.g.,* hydrogen) to control the molecular weight of the polymerization product, and/or polymerization additives, such as, for example, a static control agent or an activity limiting agent (e.g., ATMER 163, or isopropanol, as described, e.g., in US 6,174,969 B1).

According to one or more embodiments, the first polymerization zone may comprise a first reactor or more first reactors. According to one or more embodiments, the first reactor may comprise a gas-phase polymerization reactor or a liquid-phase polymerization reactor. According to one or more embodiments, the second polymerization zone may comprise a second reactor or more second reactors. According to one or more embodiments, the second reactor may comprise a gas-phase polymerization reactor.

According to one or more embodiments, the first polymerization zone may comprise a bulk-phase polymerization zone. In such a case, according to one or more embodiments, the process may further comprise flashing the product of the first polymerization zone before separating the same. Accordingly, any unreacted liquid monomer may be at least partially evaporated and then separated into a gas phase and a solid phase. According to one or more embodiments, the first polymerization zone may comprise one or more bulk-phase reactors.

According to one or more embodiments, each of the first polymerization zone and second polymerization zone may comprise a respective gas-phase reactor. According to one or more embodiments, the first polymerization zone may comprise one or more gas-phase reactors and/or the second polymerization zone may comprise one or more gas-phase reactors.

According to one or more embodiments, at least one of the first reactor and second reactor or both reactors may be a stirred bed reactor, such as for example a horizontal gas-phase stirred bed reactor or a vertical gas-phase stirred bed reactor, a fluidized bed reactor, and combinations thereof. According to one or more embodiments, at least one of the first polymerization zone and second polymerization zone or both polymerization zones does/do not comprise any fluidized bed reactor.

Depending on the type of reactors, according to one or more embodiments, the first carrier fluid may comprise either a gas or a liquid and the second carrier fluid may comprise a gas.

According to one or more embodiments, for example when each of the first carrier fluid and the second carrier fluid comprises a carrier gas, the carrier gas may comprise unreacted propylene, propane and one or more additional gases, such as, for example, hydrogen, methane, nitrogen or other inert gases, ethylene, ethane, butane, and combinations thereof. According to one or more embodiments, when the first carrier fluid comprises a liquid, any unreacted liquid monomer may be at least partially evaporated into a gas. Accordingly, all embodiments described with reference to a carrier gas may also be applicable to the gas into which a carrier liquid may be evaporated.

According to one or more embodiments, the first propylene polymer may comprise a random copolymer polypropylene or a homopolymer polypropylene. In either case, according to one or more embodiments, the second propylene polymer may comprise a random copolymer polypropylene or a homopolymer polypropylene.

According to one or more embodiments, producing the first product is performed under first polymerization conditions and producing the second product is performed under second polymerization conditions that may be identical to or different from the first polymerization conditions.

According to one or more embodiments, the first polymerization conditions may comprise a pressure from 15 bar to 50 bar, and/or a temperature from 30°C to 120°C.

According to one or more embodiments, the first polymerization conditions may comprise a pressure from 20 to 45 bar, for example a pressure from 25 bar to 35 bar, *e.g.,* of about 30 bar, and/or a temperature from 50°C to 100°C, for example a temperature from 60°C to 90°C, *e.g.,* of about 80°C.

According to one or more embodiments, the second polymerization conditions may comprise a pressure from 15 bar to 50 bar, and/or a temperature from 30°C to 120°C.

According to one or more embodiments, the second polymerization conditions may comprise a pressure from 20 to 45 bar, for example a pressure from 25 to 35, *e.g.,* of about 30 bar, and a temperature from 50°C to 100°C, for example a temperature from 60°C to 90°C, *e.g.,* of about 80°C.

According to one or more embodiments, the carrier fluid recycle stream is a carrier gas recycle stream that is not subject to any gas separation or gas processing before being fed to the first polymerization zone and the second polymerization zone.

According to one or more embodiments, the process further comprises withdrawing the first reactor recycle stream from a first reactor of the first polymerization zone and recycling the first reactor recycle stream to the first reactor. The first reactor recycle stream may comprise a first reactor recycle gas stream. According to one or more embodiments, the first reactor recycle stream is recycled to the first reactor via a first recycle fluid cool loop configured to remove heat of polymerization reaction of the first reactor.

According to one or more embodiments, the process further comprises withdrawing the second reactor recycle stream from a second reactor of the second polymerization zone and recycling the second reactor recycle stream to the second reactor. The second reactor recycle stream may comprise a second reactor recycle gas stream. According to one or more embodiments, the second reactor recycle stream is recycled to the second reactor via a second recycle fluid cool loop configured to remove heat of polymerization reaction of the second reactor.

According to one or more embodiments, the carrier fluid stream may be a carrier gas stream and may be recycled to the first reactor recycle gas stream withdrawn from the first reactor and to the second reactor recycle gas stream withdrawn from the second reactor. According to one or more embodiments, the carrier gas stream may be directly recycled to the first reactor recycle gas stream withdrawn from the first reactor and may be directly recycled to the second reactor recycle gas stream withdrawn from the second reactor, without being subject to any separation between the respective reactor and reactor recycle gas stream.

According to one or more embodiments, the first recycle fluid cool loop is a first recycle gas cool loop comprising a first primary condenser and a first recycle compressor. According to one or more embodiments, for example for lower gas flow rates, the first recycle fluid cool loop is a first recycle gas cool loop comprising a first primary condenser and a first gas eductor.

According to one or more embodiments, the second recycle fluid cool loop is a second recycle gas cool loop comprising a second primary condenser and a second recycle compressor. According to one or more embodiments, for example for lower gas flow rates, the second recycle fluid cool loop is a second recycle gas cool loop comprising a second primary condenser and a second gas eductor.

According to one or more embodiments, a first recycle gas stream from the first reactor is fed to the first primary condenser and is cooled against a cooling liquid, such as for example cooling water, forming a first liquified recycle gas and, optionally, a first cooled recycle gas vapor. According to one or more embodiments, the first recycle gas stream may be cooled against the cooling liquid to a temperature from 20°C to 50°C, depending on site conditions. According to one or more embodiments, the first liquified recycle gas is recycled to the first reactor and the first cooled recycle gas vapor is compressed by the first recycle compressor, or, as the case may be, the first gas eductor, forming a first compressed cooled recycle gas vapor which may be then fed to the first reactor either directly or via a line feeding the first liquified recycle gas to the first reactor.

According to one or more embodiments, a second recycle gas stream from the second reactor is fed to the second primary condenser and is cooled against a cooling liquid, such as for example cooling water, forming a second liquified recycle gas and, optionally, a second cooled recycle gas vapor. According to one or more embodiments, the second recycle gas stream may be cooled against the cooling liquid to a temperature from 20°C to 50°C. According to one or more embodiments, the second liquified recycle gas is recycled to the second reactor and the second cooled recycle gas vapor is compressed by the second recycle compressor, forming a second compressed cooled recycle gas vapor which may be then fed to the second reactor.

According to one or more embodiments, the process further comprises at least partially condensing at least a portion of non-condensed gas remaining in the second cooled recycle gas vapor output from the second primary condenser, for example by means of a secondary condenser, forming a liquified gas stream and a chilled recycle gas vapor.

According to one or more embodiments, the second recycle gas loop further comprises the secondary condenser. According to one or more embodiments, the liquified gas stream may be recycled to the second primary condenser. According to one or more embodiments, the flow rate of the non-condensed gas to the secondary condenser may be controlled by back-flooding the secondary condenser by adjusting the flow rate of the liquified gas stream.

According to one or more embodiments, recycling the carrier fluid recycle stream may comprise compressing the carrier fluid recycle stream.

According to one or more embodiments, transferring propane accumulated in the first polymerization zone to the second polymerization zone may be performed via any line putting the first polymerization zone in direct or indirect fluid communication with the second polymerization zone. According to one or more embodiments, such a line may put in direct fluid communication the first recycle fluid cool loop included in the first polymerization zone and the second recycle fluid cool loop included in the second polymerization zone.

Once the propane content in the second reactor recycle stream attains a second threshold higher than the first threshold, the method may comprise stopping recycling the carrier fluid recycle stream to the first polymerization zone. In other words, once the second threshold is attained, the carrier fluid stream is recycled to the second polymerization zone only.

According to one or more embodiments, the process further comprises, in the parallel operation mode, purging any inert gases other than propane (such as, for example, ethane and butane) and light components comprising gases lighter than ethylene (such as, for example, hydrogen, methane, and nitrogen). According to one or more embodiments, the process further comprises, in the parallel operation mode, purging hydrogen and nitrogen. According to one or more embodiments, the process further comprises, after the operation mode is switched from the parallel operation mode to the serial operation mode and recycling of the carrier fluid stream to the first polymerization zone is stopped, purging propane and any other inert gases (such as, for example, ethane and butane) and light components comprising gases lighter than ethylene (such as, for example, hydrogen, methane, and nitrogen). According to one or more embodiments, purging may be performed from the second recycle fluid cool loop and, optionally, from the first recycle fluid cool loop.

According to one or more embodiments, purging may be performed from a line feeding the second liquified recycle gas output from the second primary condenser to the second reactor. According to one or more embodiments, the main component of the second liquified recycle gas is propane. For example, the second liquified recycle gas comprises 35 wt% to 65 wt% propane, *e.g.,* 50 wt% propane.

According to one or more embodiments, purging from the second recycle fluid cool loop may be alternatively or additionally performed from the chilled recycle gas vapor output from the secondary condenser. According to one or more embodiments, the chilled recycle gas vapor output from the secondary condenser may comprise nitrogen, hydrogen and/or ethane at higher concentrations than the second reactor recycle stream and the second cooled recycle gas vapor output from the second primary condenser.

According to one or more embodiments, purging from the second recycle fluid cool loop may be alternatively or additionally performed from the second cooled recycle gas vapor. For example, this alternative or additional purging may be performed at an increased ethane to propane ratio in the first and second propylene streams.

According to one or more embodiments, purging from the first recycle fluid cool loop may be performed from a non-condensed cooled recycle gas vapor output from the first primary condenser. For example, this purging may be performed to quickly reduce hydrogen content in the first polymerization zone and thereby reduce the melt flow rate of the polymer produced in the first polymerization zone.

According to one or more embodiments, the process may comprise one or more of the above-mentioned purging operations.

According to one or more embodiments, the first threshold of total propane content in the first reactor recycle stream and the second reactor recycle stream is at least 15 wt% based on the total weight of the first reactor recycle stream and the second reactor recycle stream. According to one or more embodiments, the first threshold is from 15 wt% to 30 wt%, for example from 20 wt% to 25 wt%, based on the total weight of the first reactor recycle stream and the second reactor recycle stream.

According to one or more embodiments, the second threshold of propane content in the second reactor recycle stream is at least 30 wt%, for example, at least 35 wt%, from 30 wt% or 35 wt% to 40 wt%, based on the total weight of the second reactor recycle stream.

By selecting such values of second threshold, a condensation rate obtainable after adding an olefin (e.g., ethylene) stream to the second polymerization zone may more and more conveniently remove the heat of reaction of the second polymerization zone.

In a further aspect, embodiments disclosed herein relate to a production process for producing impact copolymer polypropylene. The production process may comprise: the process for setting up impact copolymer polypropylene production in at least two polymerization zones in accordance with any one of the embodiments described herein; and, in the serial operation mode: feeding a first olefin stream comprising at least 90%-100% v/v propylene and 0%-10% v/v ethylene in the first polymerization zone, thereby producing a third product comprising a propylene polymer; and feeding the third product and a second olefin stream comprising 30%-100% v/v ethylene and 0%-70% v/v propylene to the second polymerization zone, thereby producing a fourth product comprising an impact copolymer polypropylene. According to one or more embodiments, the second olefin stream is fed to the second polymerization zone after stopping recycling of carrier fluid to the first polymerization zone.

According to one or more embodiments, the first olefin stream of the production process may be identical to the first propylene stream of the setting up process. According to one or more embodiments, the first olefin stream may further comprise minor amounts of ethylene, such as, for example, 0.1%-10% v/v ethylene, 0.5%-7% v/v ethylene, 2 to 5% v/v ethylene.

According to one or more embodiments, the second olefin stream of the production process may comprise 30%-100% v/v ethylene, 40%-80% v/v ethylene, 50%-70% v/v ethylene, and corresponding amounts of propylene.

According to one or more embodiments, the production process may comprise feeding a third catalyst to the first polymerization zone. According to one or more embodiments, the production process may further comprise, optionally, feeding a fourth catalyst to the second polymerization zone, which may be identical to the second catalyst.

According to one or more embodiments, any catalyst suitable for the polymerization of propylene may be fed to the first polymerization zone, such as, for example, any catalyst selected from the group comprising Ziegler-Natta catalysts and single site catalysts, such as metallocene catalysts.

According to one or more embodiments, the third catalyst is identical to the first catalyst.

According to one or more embodiments, producing the third product is performed under third polymerization conditions. According to one or more embodiments, the third polymerization conditions comprise a pressure from 15 bar to 50 bar, and/or a temperature from 30°C to 120°C. According to one or more embodiments, the third polymerization conditions may comprise a pressure from 20 bar to 45 bar, for example from 25 bar to 35 bar, e.g., of about 30 bar, and/or a temperature from 50°C to 100 °C, for example from 60°C to 90°C, *e.g.,* of about 80°C.

According to one or more embodiments, producing the fourth product is performed under fourth polymerization conditions. According to one or more embodiments, the fourth polymerization conditions comprise a pressure from 15 bar to 50 bar, for example from 20 bar to 45 bar, from 25 bar to 35 bar, *e.g.,* of about 28 bar, and/or a temperature from 30°C to 120°C, for example from 40°C to 100°C, from 50°C to 90°C, *e.g.,* of about 75°C.

According to one or more embodiments, the production process further comprises separating reactive gases from the third product before feeding the third product to the second reactor. According to one or more embodiments, separating may be performed in a transfer system downstream of the first polymerization zone for transferring the polymer included in the third product obtained in the first polymerization zone to the second polymerization zone.

In a further aspect, embodiments disclosed herein relate to a system for setting up impact copolymer polypropylene production in at least two polymerization zones. The setting up system may comprise: a first polymerization zone configured to convert a first propylene stream comprising propane to a first product comprising a first propylene polymer and a first carrier fluid; a second polymerization zone configured to be operated in an operation mode parallel to or serial with the first polymerization zone and convert a second propylene stream comprising propane to a second product comprising a second propylene polymer and a second carrier fluid; and a recycle line for recycling, in the parallel operation mode, a carrier fluid recycle stream comprising the first carrier fluid and the second carrier fluid to the first polymerization zone and to the second polymerization zone. The setting up system may further comprise a controller configured to, once a total propane content in a first reactor recycle stream and a second reactor recycle stream attains a first threshold, switch the operation mode from the parallel operation mode to the serial operation mode; and at least one transfer line for transferring propane accumulated in the first polymerization zone to the second polymerization zone. The controller may be further configured to, once the propane content in the second reactor recycle stream reaches a second threshold higher than the first threshold, stop recycling the carrier fluid recycle stream to the first polymerization zone.

According to one or more embodiments, the controller may comprise a distributed control system (DCS). The DCS may rely, for example, on process gas chromatography measurements as process variables.

According to one or more embodiments, the setting up system may comprise any of the steps or features defined in any one of the embodiments described with reference to the setting up process and vice versa. So, for example, according to one or more embodiments, the first polymerization zone of the setting up system may comprise one or more first reactors, at least one of which may comprise a gas-phase polymerization reactor or a liquid-phase polymerization reactor or all of which may comprise more reactors of any of these types.

According to one or more embodiments, the controller may be further configured to increase a rate of the carrier fluid recycle stream recycled to the first polymerization zone and to the second polymerization zone until the total propane content in the first reactor recycle stream and the second reactor recycle stream attains the first threshold.

In a further aspect, embodiments disclosed herein relate to a production system for producing impact copolymer polypropylene. The production system may comprise: the setting up system according to any one of the embodiments described herein, and a transfer system downstream of the first polymerization zone for transferring a propylene polymer produced in the first polymerization zone (*i.e.,* the propylene polymer comprised in the third product referred to in the production process) to the second polymerization zone when the second polymerization zone is operated in the operation mode serial with the first polymerization zone. According to one or more embodiments, the production system further comprises a separator for separating reactive gases from the third product of the first polymerization zone. According to one or more embodiments, the separator may be included in the transfer system.

In a further aspect, embodiments disclosed herein relate to a use of propane contained in a propylene feedstock for setting up impact copolymer polypropylene production in at least two polymerization zones. The use may comprise accumulating the propane in a first polymerization zone and a second polymerization zone during a parallel operation mode thereof producing respective propylene polymers, and transferring the propane accumulated in the first polymerization zone to the second polymerization zone during a serial operation mode.

According to one or more embodiments, accumulating may be obtained by recycling a carrier fluid recycle stream to the first polymerization zone and to the second polymerization zone until a total propane content in a first reactor recycle stream and a second reactor recycle stream attains a first threshold, wherein the carrier fluid recycle stream comprises a first carrier fluid and a second carrier fluid withdrawn from the first and second reactor, respectively. According to one or more embodiments, the use may further comprise: once the total propane content in the first reactor recycle stream and second reactor recycle stream attains the first threshold, switching the operation mode from the parallel operation mode to the serial operation mode. According to one or more embodiments, the use may further comprise, after transferring, and, once the propane content in the second reactor recycle stream reaches a second threshold higher than the first threshold, stopping recycling the carrier fluid recycle stream to the first polymerization zone.

According to one or more embodiments, the use may comprise any of the steps or features defined in any one of the embodiments described with reference to the setting up process and corresponding system or the production process and the corresponding system. So, for example, according to one or more embodiments, the use may comprise no gas separation or gas processing of the carrier fluid recycle stream before the carrier fluid recycle stream is fed to the first polymerization zone and the second polymerization zone.

Referring now to Figure 1, a production system for producing impact copolymer polypropylene according to one or more embodiments is generally designated by reference number 1. In the following description and claims, the same reference sign may be used to designate a stream as well as a line carrying the stream.

The production system 1 comprises a system for setting up impact copolymer polypropylene production in two polymerization zones, which will be described in detail in the following, and a transfer system 20.

In the figure, the first polymerization zone is designated by reference numbers 2 and 5 and the second polymerization zone is designated by reference numbers 7 and 10. The second polymerization zone 7, 10 is configured to be operated in an operation mode either parallel to or serial with the first polymerization zone 2, 5. By way of example, each of the first polymerization zone 2, 5 and second polymerization zone 7, 10 may comprise a respective gas-phase reactor 2, 7 (first and second reactor, respectively), such as a vertical gas-phase stirred bed reactor. The first polymerization zone 2, 5 and the second polymerization zone 7, 10 may further comprise a first recycle gas cool loop 5 and a second recycle gas cool loop 10, respectively, which are detailed below.

The transfer system 20 may comprise one or more transfer vessels configured to separate a polymer product 3b obtained in the first polymerization zone 2, 5 and/or a polymer product 41 obtained in the second polymerization zone 7, 10 from contaminants 40 and recover an unreacted monomer 27. The unreacted monomer 27 may be recycled back to the first polymerization zone 2, 5 via a corresponding line 27 and, optionally, also to the second polymerization zone 7, 10 via a branch of line 27 (not shown) connecting to the second polymerization zone 7, 10. The transfer system 20 may be further configured to transfer the polymer product 3b to the second polymerization zone 7, 10 operated in an operation mode serial with the first polymerization zone 2, 5. The transfer system 20 may be further configured to transfer the contaminants 40 to a purge and carrier gas system 31, which is described in more details below. By way of example, the transfer system 20 may comprise a system as described in European patent application no. EP 24 169 732.5. Alternatively, however, any gas-lock system known to the skilled person as suitable for separating a polymer powder from gas may be used between the two polymerization zones.

The production system 1 may further comprise a first compressor 43 configured to compress the unreacted monomer 27 as well a corresponding line 27 to recycle the compressed unreacted monomer back to the first polymerization zone 2, 5.

The system for setting up impact copolymer polypropylene production may be configured to perform a transition from a production of a non-impact polypropylene in the two polymerization zones, such as for example propylene homopolymer, to a production of an impact copolymer polypropylene in the same polymerization zones. The impact copolymer polypropylene may be a heterophasic copolymer polypropylene comprising a matrix phase and an elastomeric phase dispersed therein made by copolymerizing propylene with a certain amount of another monomer (*e.g.,* 4 wt% to 30 wt% of the final polymer), such as, for example, ethylene.

The setting up system may comprise the first polymerization zone 2, 5, a first reactor recycle line 4 for recycling a first reactor recycle stream 4 to the first reactor 2, the second polymerization zone 7, 10, a second reactor recycle line 9 for recycling a second reactor recycle stream 9 to the second reactor 7, a second compressor 30, a recycle line 26 for recycling, in a parallel operation mode, a carrier fluid recycle stream 26 to the first polymerization zone 2, 5 and to the second polymerization zone 7, 10, a controller (not shown in the figure), and at least one transfer line 29 for transferring propane accumulated in the first polymerization zone 2, 5 to the second polymerization zone 7, 10, thus increasing the propane content in the second polymerization zone 7, 10. As shown in Figure 1, a branch recycle line 26' may be provided to put into communication the recycle line 26 with the second polymerization zone 10, 7.

In the parallel mode, the first polymerization zone 2, 5 is configured to convert a first propylene stream 1a comprising propane to a first product 3a. The first propylene stream 1a may comprise at least about 0.2 wt% propane based on the total weight of the first propylene stream 1a. The conversion of the first propylene stream 1a to the first product 3a may be performed in the presence of a first catalyst, which may be a Ziegler-Natta catalyst. The first product 3a may comprise a first propylene polymer, such as a propylene homopolymer, and a first carrier fluid. In the parallel mode, the second polymerization zone 7, 10 is configured to convert a second propylene stream 6a comprising propane to a second product 8a. The second propylene stream 6a may be identical to the first propylene stream 1a and may thus comprise at least about 0.2 wt% propane based on the total weight of the second propylene stream 6a. The conversion of the second propylene stream 6a to the second product 8a may be performed in the presence of a second catalyst, which may be a Ziegler-Natta catalyst. The second product 8a may comprise a second propylene polymer, such as a propylene homopolymer, and a second carrier fluid. Accordingly, the carrier fluid recycle stream 26 in recycle line 26 comprises the first carrier fluid and the second carrier fluid, which, in view of the type of reactors here described, may comprise a first carrier gas and a second carrier gas, respectively. By way of example, each of the first and second carrier gas may comprise unreacted propylene, propane and one or more additional gases, such as, for example, hydrogen, methane, nitrogen or other inert gases, ethylene, ethane, butane and combinations thereof, depending on the composition of the propylene streams and any optional additional compounds that may be fed to the polymerization zones.

The controller may be configured to, once the total propane content in the first reactor recycle stream 4 and the second reactor recycle stream 9 attains a first threshold, switch the operation mode from the parallel operation mode to the serial operation mode, and, once the propane content in the second reactor recycle stream 9 reaches a second threshold higher than the first threshold, stop recycling the carrier fluid recycle stream 26 to the first polymerization zone 2, 5. For example, the first threshold of total propane content in the first reactor recycle stream 4 and the second reactor recycle stream 9 may be 20 wt% based on the total weight of the first reactor recycle stream 4 and the second reactor recycle stream 9. For example, the second threshold of propane in second reactor recycle stream 9 may be 35 wt% based on the total weight of the second reactor recycle stream 9.

The first recycle gas cool loop 5 is configured to remove heat of polymerization reaction of the first reactor 2 and may comprise the first reactor recycle line 4, a first primary condenser 13 and a first recycle compressor 21. The second recycle gas cool loop 10 is configured to remove heat of polymerization reaction of the second reactor 7 and may comprise the second reactor recycle line 9, a second primary condenser 14 and a second recycle compressor 22. The second recycle gas loop 10 may further comprise a secondary condenser 16 for at least partially condensing at least a portion of non-condensed gas remaining in a second cooled recycle gas vapor 11 output from the second primary condenser 14, thus forming a liquified gas stream 12 that may be recycled with a corresponding line 12 to the second primary condenser 14. The secondary condenser 16 may be for example cooled by a refrigerant, chilled water, or an evaporating monomer. According to one or more embodiments, the temperature of the refrigerant, chilled water, or evaporating monomer in the secondary condenser 16 may be controlled, for example, to target a higher concentration of light components or ethane. Additionally, the second polymerization zone 10, 7 may further comprise an optional propane storage 46, thus increasing the flexibility of the production system comprising the setting up system.

The production system may further comprise the above-mentioned carrier and purge gas recovery unit 31. The carrier and purge gas recovery unit 31 may comprise, upstream of the second compressor 30, a degassing vessel 33 for separating any of the products of the first and second reactors 2, 7, such as the first product 3a and/or the second product 8a (but also any of the products described below with reference to the serial operation mode), into the carrier gas to be recycled and a solid phase 34 comprising polymer powder. The carrier and purge gas recovery unit 31 may further comprise a purge vessel 35 to purge any remaining monomer from the polymer powder. The purge vessel 35 may be configured to recover, e.g., 80% or even more, up to 99.5 %, of the hydrocarbons that remain in the solid phase 34 after degassing, for example by purging with an inert gas 32, e.g., nitrogen, in counterflow to the polymer powder of the solid phase 34, thus obtaining a final polymer 47. The final polymer 47 may be then converted into pellets that may incorporate well-dispersed additives.

Downstream of the purge vessel 35, according to one or more embodiments, a hydrocarbon recovery unit 36 may also be provided to separate the inert gas 32 from hydrocarbon monomers, thus forming an additional stream 37 of recovered carrier gas that may be fed to the recycle line 26 and a stream 38 of inert gas, e.g., nitrogen, that may be recirculated to the purge vessel 35. According to one or more embodiments, a purge line 39 may be provided to discharge inert gases, e.g., nitrogen, contaminated with hydrocarbon monomers from the hydrocarbon recovery unit 36.

A process for setting up impact copolymer polypropylene production in the reactors 2 and 7 may be as detailed in the following. The setting up process may comprise feeding the first propylene stream 1a comprising propane to the first polymerization zone 5, 2, thereby producing the first product 3a comprising the first propylene polymer and the first carrier fluid. The setting up process may further comprise recycling the first reactor recycle stream 4 to the first reactor 2. The setting up process may further comprise feeding the second propylene stream 6a comprising propane to the second polymerization zone 10, 7 operated in an operation mode parallel to the first polymerization zone 5, 2, thereby producing the second product 8a comprising the second propylene polymer and the second carrier fluid. The setting up process may further comprise recycling the second reactor recycle stream 9 to the second reactor 7. The setting up process may further comprise recycling the carrier fluid recycle stream 26, which comprises the first carrier fluid and the second carrier fluid, by the recycle line 26 to the first polymerization zone 5, 2 and to the second polymerization zone 10, 7. The carrier fluid recycle stream 26 may comprise about the same propane content as the sum of propane content of the first and second reactor recycle streams 4 and 9 and any unreacted propylene. Recycling the carrier fluid recycle stream 26 results in accumulating propane in the first polymerization zone and the second polymerization zone during setting up. However, whenever steady-state parallel production is envisaged, since decreasing the propane content in the first and second polymerization zones reduces catalyst consumption, lower propane concentrations may be used in steady-state parallel production.

The setting up process, once the total propane content in the first reactor recycle stream 4 and second reactor recycle stream 9 attains the first threshold, further comprises switching the operation mode from the parallel operation mode to the serial operation mode. The setting up process further comprises transferring propane accumulated in the first polymerization zone 5, 2 to the second polymerization zone 10, 7, and, once the propane content in the second reactor recycle stream 9 reaches the second threshold, stopping recycling the carrier fluid recycle stream 26 to the first polymerization zone 5, 2. In other words, once the second threshold is attained, the carrier gas stream 26 is recycled to the second polymerization zone only via the lines 26 and 26'. Transferring propane accumulated in the first polymerization zone 5, 2 to the second polymerization zone 10, 7 may be performed via the transfer line 29.

The setting up process may further comprise feeding the first catalyst to the first polymerization zone 5, 2, the second catalyst to the second polymerization zone 10, 7, and one or more additional optional compounds, such as, for example, static control agent(s) or activity limiting agent(s) to one of or both the polymerization zones. The additional optional compounds may further comprise hydrogen to control the molecular weight of the polymerization product, and/or polymerization additives, such as, for example, a static control agent or an activity limiting agent. In such a case, the carrier gas further comprises these additional optional compounds.

The setting up process may further comprise reducing a flow of the second catalyst fed to the second polymerization zone 10, 7 before switching the operation mode from the parallel operation mode to the serial operation mode. For example, such a flow may be reduced, for example, to 50% of a standard value, and may be reduced to zero when the switching to the serial operation mode is terminated.

The first product 3a may be produced under first polymerization conditions comprising a pressure of 15 bar to 50 bar, and a temperature from 30°C to 120°C. For example, first product 3a may be produced at a pressure from 20 bar to 45 bar, a pressure from 25 bar to 35 bar, *e.g.,* of 30 bar, and a temperature from 50°C to 100°C, or from 60 °C to 90°C, *e.g.,* of about 80°C. The second product 8a may be produced under second polymerization conditions that may be identical to the first polymerization conditions or different from the first polymerization conditions, that, according to one or more embodiments, may be selected within the same ranges.

The carrier fluid recycle stream 26 may be a carrier gas recycle stream which is not subject to any gas separation or gas processing before being recycled to the first polymerization zone 2,5 and the second polymerization zone 7,10.

The first reactor recycle stream 4 may be a first reactor recycle gas stream withdrawn from the first reactor 2 and recycled to the first reactor 2 via the first recycle gas cool loop 5. The first recycle stream 4 may be fed to the first primary condenser 13 and may be cooled against a cooling liquid, such as for example cooling water, forming a first liquified recycle gas 25 and, optionally, a first cooled recycle gas vapor 15. The first cooled recycle gas vapor 15 output from the first primary condenser 13 may be compressed by the first recycle compressor 21 and fed to the first reactor 2 via a line 44. The first liquified recycle gas 25 from the first primary condenser 13 may be also fed to the first reactor 2.

The second reactor recycle stream 9 may be a second reactor recycle gas stream withdrawn from the second reactor 7 and recycled to the second reactor 7 via the second recycle gas cool loop 10. The second recycle stream 9 may be fed to the second primary condenser 14 and may be cooled against a cooling liquid, such as for example cooling water, forming a second liquified recycle gas 24 and the second cooled recycle gas vapor 11. According to one or more embodiments, at least a portion of the second cooled recycle gas vapor 11 output from the second primary condenser 14 may be fed to the secondary condenser 16 and recycled back to the second primary condenser 14 via the line 12. The second liquified recycle gas 24 from the second primary condenser 14 may be fed to the second reactor 7.

According to one or more embodiments, the process may further comprise, in the parallel operation mode, purging any inert gases and light components comprising gases lighter than propylene (such as, for example, hydrogen, and ethane). According to one or more embodiments, purging may be performed to maintain the content of any inert gases and light components at a predetermined value. According to one or more embodiments, the process may further comprise, after the operation mode is switched from the parallel operation mode to the serial operation mode and recycling of the carrier fluid stream to the first polymerization zone 5, 2 is stopped, purging propane and any inert gases and light components comprising gases lighter than propylene (such as, for example, hydrogen, and ethane). According to one or more embodiments, purging in the serial operation mode may be performed to maintain the propane content in the carrier fluid recycle stream at a predetermined value, which may be above the second threshold, *e.g.,* at 45 wt%.

Purging may be performed from the second recycle gas cool loop 10 and, optionally, from the first recycle gas cool loop 5.

Purging from the second recycle gas cool loop 10 may be performed, as shown in Figure 1, from the second liquified recycle gas 24 via a first purging line 23. In this manner, according to one or more embodiments, propane may be purged, whenever this is needed, from the stream with the highest propane content in the second recycle gas cool loop 10. For example, the second liquified recycle gas 24 may comprise 40 to 60 wt.% propane.

Purging from the second recycle gas cool loop 10 may be alternatively or further performed, as also shown in Figure 1, via a second purging line 17 from the vapor outlet of the secondary condenser 16. In this manner, according to one or more embodiments, mainly nitrogen, hydrogen, other light gases, and/or ethane may be purged. For example, this further purging may be performed to change the properties of the polymer product of the second reactor. For example, the melt flow rate of the polymer product may be controlled by purging hydrogen.

Purging from the second recycle gas cool loop 10 may be alternatively or further performed, as also shown in Figure 1, from the second cooled recycle gas vapor 11 via a third purging line 18. In this manner, according to one or more embodiments, more ethane may be purged, while still controlling propane to a target value, because the purge stream in purging line 18 may contain a higher ratio of ethane to propane.

According to one or more embodiments, purging from the second recycle gas cool loop 10 may be performed from the second liquified recycle gas 24 via the first purging line 23 only.

Purging from the first recycle gas cool loop 5 may be alternatively of further performed from the first cooled recycle gas vapor 15 output from the first primary condenser 13 via a fourth purging line 19. For example, this purging may be useful to remove hydrogen, nitrogen, or other light gases. According to one or more embodiments, a portion of the first cooled recycle gas vapor 15 may be optionally fed to the secondary condenser 16 via a line 45 to reduce hydrocarbon losses while still purging light gases from the first recycle gas loop 5. According to one or more embodiments, the fourth purging line 19 and/or line 45 may be used for product grade transitions and/or to react to process upsets, and not for steady-state operation.

One or more of the purging operations targeting hydrogen, nitrogen and/or other light gases may be alternatively or additionally performed before the operation mode is switched from the parallel operation mode to the serial operation mode.

Any of the described purging operations may be alternatively or additionally performed in parallel operation mode, and for example in steady-state parallel operation mode. For example, by purging propane via the first purging line 23 and, optionally, via a similar purging line (not shown) from the first polymerization zone 5, 2, the purge stream may contain a composition suitable for external processing units, *e.g.,* a composition comprising less hydrogen.

An impact copolymer polypropylene may be then produced in the serial operation mode by feeding a first olefin stream 1b comprising, e.g., 100 % v/v propylene and 0% v/v ethylene in the first polymerization zone 5, 2, thereby producing the third product 3b comprising a propylene polymer. The third product 3b and a second olefin stream 6b comprising 60% v/v ethylene and 40% v/v propylene may be fed to the second polymerization zone 10, 7, thereby producing a fourth product 8b comprising an impact copolymer polypropylene.

The production process of the impact copolymer polypropylene may further comprise feeding a third catalyst, which may be identical to the first catalyst, at least to the first polymerization zone 5, 2.

The third product 3b may be produced under third polymerization conditions, which may comprise, for example, a pressure of about 30 bar, and a temperature of about 80°C. The fourth product 8b may be produced under fourth polymerization conditions, which may for example comprise a pressure of about 28 bar, and a temperature of about 75°C.

Before feeding the third product 3b to the second reactor 7, most of the reactive gases may be separated from the third product 3b in the transfer system 20. The polymer product 3b obtained in the first polymerization zone 2, 5 of the system 1 is separated from most unreacted monomer 27 by the transfer system 20 and fed to the second polymerization zone 7, 10 via a line 48. Additionally, according to one or more embodiments, a portion of the second cooled recycle gas vapor 11 output from the second primary condenser 14 may be compressed by the second recycle compressor 22 and fed in part to the transfer system 20 via a line 42 and in part to the second reactor 7 via a line 49. Also, a portion of the second reactor recycle stream 9 may be fed to the transfer system 20 via a line 41.

As described above, embodiments herein provide improved processes and systems which, by using available propylene feedstocks containing propane as inert condensing agent to facilitate condensation of recycle gas, advantageously remove heat of polymerization while improving resource efficiency without requiring a dedicated feed system or additional process steps such as gas separation steps.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for setting up impact copolymer polypropylene production in at least two polymerization zones, the process comprising:
feeding a first propylene stream (1a) comprising propane to a first polymerization zone (2, 5), thereby producing a first product (3a) comprising a first propylene polymer and a first carrier fluid;
recycling a first reactor recycle stream (4) to the first polymerization zone (2, 5);
feeding a second propylene stream (6a) comprising propane to a second polymerization zone (7, 10) operated in an operation mode parallel to the first polymerization zone (2, 5), thereby producing a second product (8a) comprising a second propylene polymer and a second carrier fluid;
recycling a second reactor recycle stream (9) to the second polymerization zone (7, 10);
recycling a carrier fluid recycle stream (26) comprising the first carrier fluid and the second carrier fluid to the first polymerization zone (2, 5) and to the second polymerization zone (7, 10);
once a total propane content in the first reactor recycle stream (4) and the second reactor recycle stream (9) attains a first threshold, switching the operation mode from the parallel operation mode to a serial operation mode;
transferring propane accumulated in the first polymerization zone (2, 5) to the second polymerization zone (7, 10); and
once the propane content in the second reactor recycle stream (9) reaches a second threshold higher than the first threshold, stopping recycling the carrier fluid recycle stream (26) to the first polymerization zone (2, 5).

2. The process of claim 1, wherein each of the first propylene stream (1a) and the second propylene stream (6a) comprises at least about 0.2 wt% propane based on the total weight of the first propylene stream (1a) and the second propylene stream (6a), respectively.

3. The process of claim 1 or claim 2, further comprising, in the parallel operation mode, feeding a first catalyst to the first polymerization zone (2, 5) and a second catalyst to the second polymerization zone (7, 10), and reducing a flow of the second catalyst fed to the second polymerization zone (7, 10) before switching the operation mode from the parallel operation mode to the serial operation mode.

4. The process of any one of claims 1-3, wherein producing the first product (3a) is performed under first polymerization conditions comprising a pressure from 15 bar to 50 bar, and a temperature from 30°C to 120°C.

5. The process of any one of claims 1-4, wherein producing the second product (8a) is performed under second polymerization conditions comprising a pressure from 15 bar to 50 bar, and a temperature from 30°C to 120°C.

6. The process of any one of claims 1-5, wherein the first polymerization zone (2, 5) comprises a first reactor (2) and a first recycle fluid cool loop (5) to remove heat of polymerization reaction of the first polymerization zone (2, 5), the first recycle fluid cool loop (5) comprising a first primary condenser (13) and a first recycle compressor (21), and wherein the second polymerization zone (7, 10) comprises a second reactor (7) and a second recycle fluid cool loop (10) to remove heat of polymerization reaction of the second polymerization zone (7, 10), the second recycle fluid cool loop (10) comprising a second primary condenser (14) and a second recycle compressor (22).

7. The process of claim 6, further comprising partially condensing at least a portion of non-condensed gas remaining in a second cooled recycle gas vapor (11) output from the second primary condenser (14) by means of a secondary condenser (16), forming a liquified gas stream (12) and a chilled recycle gas vapor.

8. The process of claim 6 or claim 7, further comprising, after switching the operation mode from the parallel operation mode to the serial operation mode, purging propane and any inert gases and light components comprising gases lighter than ethylene at least from the second recycle fluid cool loop (10) and, optionally, from the first recycle fluid cool loop (5).

9. The process of any one of claims 1-8, wherein the first threshold of the total propane content in the first reactor recycle stream (4) and the second reactor recycle stream (9) is at least 15 wt% based on the total weight of the first reactor recycle stream (4) and a second reactor recycle stream (9).

10. The process of any one of claims 1-9, wherein the second threshold of the propane content in the second reactor recycle stream (9) is at least 30 wt% based on the total weight of the second reactor recycle stream (9).

11. A production process for producing impact copolymer polypropylene, wherein the production process comprises:
the process of any one of claims 1-10; and
in the serial operation mode:
feeding a first olefin stream (1b) comprising at least 90%-100% v/v propylene and 0%-10% v/v ethylene in the first polymerization zone (2, 5), thereby producing a third product (3b) comprising a propylene polymer; and
feeding the third product (3b) and a second olefin stream (6b) comprising 30%-100% v/v ethylene and 0%-70% v/v propylene to the second polymerization zone (7, 10), thereby producing a fourth product (8b) comprising an impact copolymer polypropylene.

12. The production process of claim 11, further comprising separating reactive gases from the third product (3b) before feeding the third product (3b) to the second polymerization zone (7, 10).

13. A system for setting up impact copolymer polypropylene production in at least two polymerization zones, the system comprising:
a first polymerization zone (2, 5) configured to convert a first propylene stream (1a, 1b) comprising propane to a first product (3a) comprising a first propylene polymer and a first carrier fluid;
a second polymerization zone (7, 10) configured to be operated in an operation mode parallel to or serial with the first polymerization zone (2, 5) and convert a second propylene stream (6a, 6b) comprising propane to a second product (8a) comprising a second propylene polymer and a second carrier fluid;
a recycle line (26) for recycling, in the parallel operation mode, a carrier fluid recycle stream (26) comprising the first carrier fluid and second carrier fluid to the first polymerization zone (2, 5) and to the second polymerization zone (7, 10);
a controller configured to, once a total propane content in a first reactor recycle stream (4) and a second reactor recycle stream (9) attains a first threshold, switch the operation mode from the parallel operation mode to the serial operation mode; and
at least one transfer line (29) for transferring propane accumulated in the first polymerization zone (2, 5) to the second polymerization zone (7, 10),
wherein the controller is further configured to, once the propane content in the second reactor recycle stream (9) reaches a second threshold higher than the first threshold, stop recycling the carrier fluid recycle stream (26) to the first polymerization zone (2, 5).

14. A production system (1) for producing impact copolymer polypropylene, comprising:
the system of claim 13, and
a transfer system (20) downstream of the first polymerization zone (2,5) for transferring a propylene polymer produced in the first polymerization zone (2, 5) to the second polymerization zone (7, 10) when the second polymerization zone (7, 10) is operated in the operation mode serial with the first polymerization zone (2, 5).

15. Use of propane contained in a propylene feedstock for setting up impact copolymer polypropylene production in at least two polymerization zones, comprising accumulating the propane in a first polymerization zone (2, 5) and a second polymerization zone (7, 10) during a parallel operation mode thereof producing respective propylene polymers, and transferring the propane accumulated in the first polymerization zone (2, 5) to the second polymerization zone (7, 10) during a serial operation mode.
